# EUROPÄISCHE PATENTSCHRIFT

(11) **EP 1 150 642 B1**
(45) Veröffentlichungstag und Bekanntmachung des Hinweises auf die Patenterteilung: **02.05.2003**
(21) Anmeldenummer: 00910657.6
(22) Anmeldetag: 09.02.2000
(51) Int. Cl.: A61K 6/093, A61C 9/00, C09J 183/04

(54) **EINMAL-ABFORMLÖFFEL MIT HAFTÜBERZÜGEN**
EXPENDABLE IMPRESSION TRAY WITH ADHESIVE COATING
PORTE-EMPREINTE A USAGE UNIQUE A REVETEMENTS ADHESIFS

(30) Priorität: 09.02.1999 DE 19905224; 07.04.1999 DE 19915492; 12.05.1999 DE 19921948
(43) Veröffentlichungstag der Anmeldung: 07.11.2001
(73) Patentinhaber: S & C Polymer Silicon- und Composite-Spezialitäten GmbH, 25335 Elmshorn (DE)
(72) Erfinder: ENGELBRECHT, Juergen, D-22607 Hamburg (DE)
(74) Vertreter: Forstmeyer, Dietmar, Dr. rer. nat., Dipl.-Chem.
(86) Internationale Anmeldenummer: EP0001039
(87) Internationale Veröffentlichungsnummer: WO00047165

(56) Entgegenhaltungen:
- EP-A- 0 632 060
- EP-A- 0 826 359
- WO-A-91/17046
- DE-A- 4 228 538
- US-A- 5 459 194

## Beschreibung

Die vorliegende Erfindung betrifft einen Formkörper, der:
a) eine Schicht aus durch Additions- oder Kondensationsreaktionen vernetzbaren Copolymeren, und gegebenenfalls
b) darauf eine Schicht aus durch Additions- oder Kondensationsreaktionen vernetzbarem Silicon aufweist.

Die Erfindung betrifft insbesondere mit mindestens einem Haftvermittler und gegebenenfalls Silicon beschichtete Formkörper, die sich leicht mit einem aushärtenden Silicon verbinden. Die Erfindung betrifft speziell gebrauchsfertige dentale Einmal-Abformlöffel mit haftenden Überzügen, die bei der Abdrucknahme auch ohne Verwendung von Abformlöffeladhesiven oder mechanischen Retentionen im Abformlöffel eine innige Verbindung zwischen Siliconabformmasse und Abformlöffel herstellen. Derartige Abformlöffel können beim Zahnarzt ohne weitere Vorbehandlung direkt mit Abformmassen beschickt und in den Mund gebracht werden. Sie verbinden sich mit der Siliconabformmasse inniglich, die resultierenden Siliconabformungen sind fest mit den Abformlöffeln verbunden.

Für Abformungen im Mund mit Hilfe von elastischen Abformmassen werden üblicherweise Abformlöffel eingesetzt, um die Abformmasse gezielt in den Mund einbringen zu können und den Abdruck nach Aushärten der Abformmasse möglichst ohne Verformungen aus dem Mund entfernen zu können. Abformlöffel müssen dazu sehr formstabil sein. Sie sind in der Regel vorgeformte Teile aus Hartplastik oder Metall verschiedener Größen und Geometrien.

Ein großes Problem stellt der Verbund zwischen den Abformlöffeln und den Abformmassen dar. Silicone haften nicht von selbst auf Kunststoff oder Metall; sie wirken eher als Trennmittel. Um die ansonsten sehr geeigneten Siliconabformmassen trotzdem sicher nutzen zu können, wurde zum einen versucht, mit Hilfe von mechanischen Retentionen wie Löchern, Grobsiebplattenteilen, Unterschnittleisten, umgebörtelten Löffelrändern usw., also auf mechanische Weise, die Abformmasse stabil auf dem Löffel zu halten und ein Abheben der Abformmasse bei der Herausnahme des Abdruckes aus dem Mund zu verhindern. Zum anderen wurde versucht, die Haftung der Siliconmassen auf den Löffeln mit Hilfe von Lösungen zähklebriger Polymere (Adhesive) molekular-mechanisch zu verbessern. In der Regel stellen solche Abformlöffeladhesive Lösungen nur teilweise vernetzter Silicone in flüchtigen Lösungsmitteln dar. Es findet allerdings weder zwischen Siliconabformmasse und Löffeladhesiv noch zwischen Löffeladhesiv und Abformlöffel eine chemische Reaktion statt.

Alle derartigen Maßnahmen zur verbesserten Haftung der Siliconabformmassen auf den Abformlöffeln sind jedoch mit Nachteilen verbunden. Löffel mit effektiv wirksamen grobmechanischen Retentionen bestehen in der Regel aus hartem Metall, sind teuer und daher nur als Mehrfach-Abformlöffel wirtschaftlich einzusetzen. Die Entfernung der Siliconabformmassen nach jeder Abformung ist jedoch mühsam und zeitaufwendig.

Löffel, die preiswert als Einmal-Abformlöffel eingesetzt werden können, wie z.B. Löffel aus Thermoplasten oder Aluminium, können aus Stabilitätsgründen nicht ganz so viele Lochretentionen oder Unterschnitte aufweisen. Sie zeigen daher kein ausreichendes Retentionsverhalten.

Die auf dem Markt befindlichen zähklebenden Adhesive zeigen nur eine unterstützende Wirkung: Bei etwas stärkeren Zugkräften hebt sich die Siliconabformmasse unter Verformung ab, das zähklebende Adhesiv löst sich unter Bildung vieler Ziehfäden und der dentale Abdruck wird verformt, was zu Fehlpassungen führt.

In der DE 42 28 538 A1 sind oberflächenkonditionierte Abformlöffel beschrieben, die auch nach mehreren Abformungen eine unveränderte Haftung der Abformmasse gewährleisten sollen. Die Abformlöffel werden mit einer Verbundschicht aus einer verfestigten Phenolharz-Methacrylat-Dispersion behandelt; als Haftstärken werde 0,5 Mpa angegeben. Ein sicherer Verbund ist mit derartigen Systemen nicht möglich.

Aufgabe der Erfindung war es, Formkörper bereitzustellen, die sich sehr fest mit üblicherweise als Abformmassen verwendeten Siliconmassen verbinden. Insbesondere war es die Aufgabe der Erfindung, einen Abformlöffel bereitzustellen, auf dem dentale Abformmassen insbesondere nach Abdrucknahme auch ohne Verwendung von zähklebenden Abformlöffeladhesiven oder mechanischen Retentionen irreversibel haften.

Erfindungsgemäß wird die Aufgabe durch Bereitstellung von Formkörpern gelöst, mit
a) einer Schicht aus mindestens einem durch Additions- oder Kondensationsreaktionen vernetzbaren Copolymeren, und gegebenenfalls
b) darauf einer Schicht aus mindestens einem durch Additionsoder Kondensationsreaktionen vernetzbaren Silicon, das von a) verschieden ist.

Dabei wird z.B. auf eine Schicht a) aus durch Additionsreaktionen vernetzbaren Copolymeren gegebenenfalls eine Schicht b) aus durch Additionsreaktionen vernetzbaren Siliconen oder auf eine Schicht a) aus durch Kondensationsreaktionen vernetzbaren Copolymeren gegebenenfalls eine Schicht b) aus durch Kondensationsreaktionen vernetzbaren Siliconen aufgebracht.

Die Haftkraft von üblichen dentalen Abformmassen auf entsprechenden Abformlöffeln ist ähnlich groß wie die Kohäsionskraft der Abformmassen selbst, so daß sie bei Entnahme des Abformlöffels aus dem Mund fest auf dem Löffel haften.

Der Formkörper kann gemäß einer bevorzugten Ausführungsform auf Schicht a) mit einem festhaftenden Film gehärteter Silicone überzogen werden, die noch ausreichend Reaktivität besitzen, um sich fest mit weiterem aushärtbarem Silicon z.B. gleichen Reaktionstyps wie dentalen Abformsiliconen zu verbinden.

Die erfindungsgemäßen Abformlöffel stellen für den Zahnarzt ein einfach und sicher zu verwendendes Mittel zur perfekten Positionierung und Fixierung des Siliconabformmaterials dar.

Die erfindungsgemäßen Formkörper können dadurch gekennzeichnet sein, daß sie ohne die Schichten a) und b) aus mindestens einem Kunststoff und/oder mindestens einem Metall bestehen. Als Metalle können z.B. edle und unedle Metalle ausgewählt werden.

Geeignete zu beschichtende Formkörper und insbesondere auch zu beschichtende Abformlöffel enthalten gemäß einer Ausführungsform Kunststoffe oder bestehen aus diesen, die durch leichtflüchtige inerte Lösungsmittel wie z.B. halogenierte oder nichthalogenierte aliphatische oder aromatische Kohlenwasserstoffe, Ether, Ketone, Ester oder cyclischer Siloxane angelöst werden können. Geeignete Abformlöffel sind z.B. solche, die von ihren Festigkeitseigenschaften her auch bisher schon Verwendung fanden und/oder Polystyrol, Polycarbonat, Polymethacrylat, Polyvinylchlorid, Polysulfon, Polymethylpenten, Styrolacrylnitril oder Gemische davon enthalten.

In alternativer Weise können die Formkörper und insbesondere die Abformlöffel ein oder mehrere Metalle wie Aluminium oder Stahl oder edle Metalle enthalten oder aus ihnen bestehen. Erfindungsgemäß einsetzbare Einmalabformlöffel können also z. B. Abformlöffel sein, die ohne die Schichten a) und b) aus preiswerten Metallen wie z.B. Aluminium oder Stahl bestehen. Die Oberflächen derartiger Formkörper können z.B. mit Alkoxy-, Alkacetoxy-, Vinyl-, oder Methacrylsilan, Phosphorsäure, Phosphonsäuren, mehrfunktionellen Carbonsäuren oder auch Derivaten von diesen behandelt werden. Derartige Oberflächenbehandlungen sind an sich bekannt.

Auch können insbesondere die Formkörper, die ohne die Schichten a) und b) mindestens ein Metall enthalten mit einem oder mehreren anlösbaren Kunststoffen beschichtet werden. Die Schichtdicke derartiger Schichten können z.B. 50-350 µm und vorzugsweise etwa 100 um betragen.

Formkörper bzw. Abformlöffel sind erfindungsgemäß z.B. mit durch Additionsreaktionen vernetzbaren Copolymeren (Haftvermittlern, Primern) beschichtet, wie sie z.B. in der Anmeldung DE 199 05 224 der Firma S & C Polymer vom 9. Februar 1999 und der Anmeldung EP 94 304 825.6 der Firma Tokuyama Corporation vom 1. Juli 1994 für additionsvernetzende Systeme beschrieben sind. Auf diese Anmeldungen wird bezüglich der durch Additionsreaktionen vernetzbaren Copolymere ausdrücklich Bezug genommen.

Derartige Haftvermittler (A) für zu beschichtende Abformlöffel für additionsvernetzende Abformmassen können z. B. als Lösungen von Polymeren vorliegen, die ausreichend SiH- oder Vinyl-Gruppen enthalten. Die Konzentrationen der Lösungen betragen vorzugsweise 0,1 bis 20 Gew.-%.

Die Formkörper bzw. Abformlöffel können erfindungsgemäß auch mit durch Kondensationsreaktionen vernetzbaren Copolymeren (Haftvermittlern, Primern) beschichtet sein, wie sie z.B. in der Anmeldung DE 199 15 492 der Firma S & C Polymer vom 7. April 1999 für kondensationsvernetzende Systeme beschrieben sind. Auf diese Anmeldung wird bezüglich der durch Kondensationsreaktionen vernetzbaren Copolymere ausdrücklich Bezug genommen.

Derartige Haftvermittler (K) für zu beschichtende Abformlöffel für kondensationsvernetzende Abformmassen können z. B. als Lösungen von Polymeren vorliegen, die ausreichend Silanolgruppen - Si(X)- enthalten, wobei X=OH oder entsprechende leicht hydrolysierbare Ester oder Amide-O-Rc, -O-CO-Rc, -NRd-Rc, -NRd-CO-Rc sind. Die Konzentrationen der Lösungen betragen vorzugsweise 0,1 bis 20 Gew.-%.

Bei Formkörpern aus Kunststoff sollten sich die gelösten Polymere bzw. die zur Lösung eingesetzten Lösungsmittel vorzugsweise in der Kunststoffoberfläche der Formkörper lösen und/oder die Oberfläche der Formkörper anlösen bzw. sich mit der Oberfläche verbinden können. Besonders bevorzugt werden Lösungsmittel eingesetzt, die ausreichend, d.h. z.B. bei Temperaturen von maximal 100°C flüchtig sind.

Bei erfindungsgemäßen Formkörpern umfaßt die Schicht a) gemäß einer weiteren Ausführungsform Copolymere, die bereits zumindest teilweise durch eine Additions- und/oder Kondensationsreaktion vernetzt sind. Sie können z.B. einen Vernetzungsgrad von bis zu 10, 20, 30, 50, 60 oder 80 %, bezogen auf die funktionellen Gruppen aufweisen.

Die Copolymere sind z.B. solche, die durch die Copolymerisation von SiH-Gruppen-haltigen Siloxanen mit ungesättigten Verbindungen erhalten werden.

Die erfindungsgemäßen Formkörper, insbesondere die Abformlöffel, können über lange Zeiträume gebrauchsfähig sein.

Erfindungsgemäß umfaßt Schicht a) z.B. Copolymere (A), die insbesondere in der längsten Kette (Grundkette) sich wiederholende Einheiten
a) der Formel 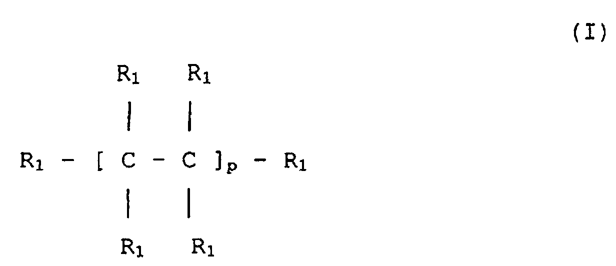 und
b) der Formel 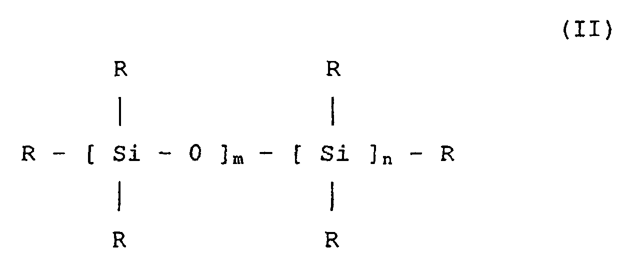 enthalten, wobei m und p unabhängig voneinander ganze Zahlen > 0 sind, n 1, 2, 3 oder 4 ist, jeder der Reste R und R₁ unabhängig voneinander ein H-Atom oder eine substituierte oder unsubstituierte Alkylgruppe, z.B. eine substituierte oder unsubstituierte C₁-C₆-Alkylgruppe, eine Gruppe der Formel = CR'₂, -CR'₂-OR', -OR', -COOR', -SiR'₃ oder eine gegebenenfalls mit einer oder zwei -CR' = CR'₂-Gruppen substituierte Phenylgruppe oder eine Bindung zur Einheit I oder II sein kann, wobei jeder der Reste R' unabhängig voneinander ein H-Atom oder eine substituierte oder unsubstituierte Alkylgruppe, z.B. eine substituierte oder unsubstituierte C₁-C₆-Alkylgruppe sein kann, mit der Maßgabe, daß die Einheiten der Formel II mindestens eine SiH-Gruppe enthalten und daß die Einheiten der Formel I mit den Einheiten der Formel II über C-Si-Bindungen verknüpft sind.

Gemäß einer weiteren bevorzugten Ausführungsform umfaßt die Schicht a) Copolymere (K) mit sich gegebenenfalls wiederholenden strukturellen Einheiten, insbesondere in der längsten Kette (Grundkette)
a) der Formel 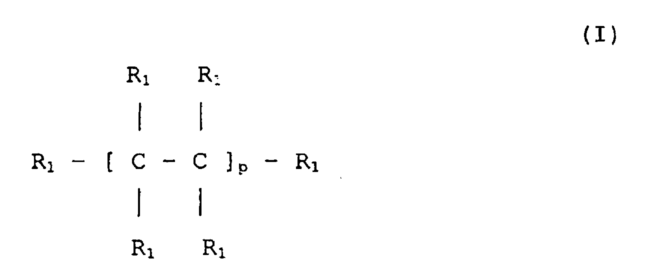 und
b) der Formel 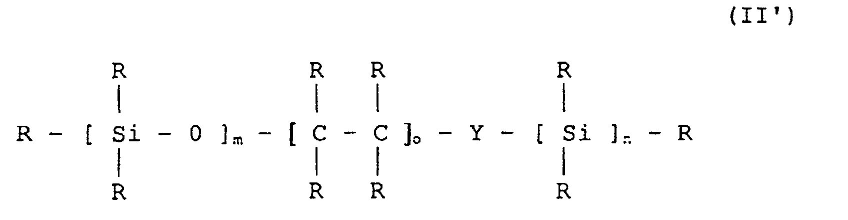 wobei
   m und p unabhängig voneinander ganze Zahlen > 0 sind,
   n = 1, 2, 3 oder 4 ist,
   o = 1 oder 0 ist,
   Y eine Bindung oder eine Gruppe der Formel -CR₂- oder -CO-O-CR₂-CR₂-CR₂- ist,
jeder der Reste R und R₁ unabhängig voneinander ein H-Atom, eine gegebenenfalls substituierte Alkylgruppe, eine Gruppe der Formel -CR'₂-OR', -OR', -COOR', -SiR_{c}R_{d}Rₑ, -NR_{d}-R_{c}, ein organischer Säurerest, dessen Anhydrid oder dessen entsprechender vorzugsweise leichthydrolysierbarer Ester der Formel -O-CO-R_{c} oder dessen entsprechendes vorzugsweise leichthydrolysierbares Amid der Formel -NR_{d}-CO-R_{c}, eine gegebenenfalls mit einer oder zwei -CR'=CR'₂ - Gruppen substituierte Phenylgruppe, eine Gruppe der Formel - CRₑR_{f}CHR_{g}-SiX₃, eine Gruppe der Formel -SiOSiO(SiO)ₘH, eine Epoxygruppe, eine Aziridingruppe, eine Phosphat- oder Phosphonatgruppe bzw. deren Anhydride, eine Bindung ist oder zwei Reste R und/oder R₁ zusammen eine Gruppe der Formel =CR₂ darstellen,
wobei jeder der Reste R', R_{c}, R_{d}, Rₑ, R_{f}, R_{g} und X unabhängig voneinander ein H-Atom eine -OH-Gruppe, eine gegebenenfalls substituierte Alkylgruppe, eine Alkoxygruppe oder eine gegebenenfalls substituierte Arylgruppe sein kann,
mit der Maßgabe, daß in mindestens einer Einheit der Formel II mindestens ein an ein Si-Atom gebundener Rest R eine -OH, OR_{c}, -NR_{d}R_{c}-Gruppe oder ein Rest der Formeln -OCOR_{c}, -NR_{d}COR_{c} ist, wobei n 1, 2, 3 oder 4 ist.

Die nachstehenden Angaben beziehen sich auf alle Ausführungsformen. Vorzugsweise weisen die Alkylgruppen, die Alkoxygruppen und die organischen Säurereste 1, 2, 3, 4, 5, 6, 7 oder 8, vorzugsweise 1, 2, 3, 4, 5 oder 6 C-Atome auf, die besonders bevorzugt linear angeordnet sind. Beispiele für die Alkylgruppen sind Methyl-, Ethyl-, n-Propyl-, i-Propyl-, n-Butyl-, i-Butyl-, n-Penyl- und n-Hexyl-Gruppen.

Ein Durchschnittsfachmann wird die Substituenten gemäß seinem Fachwissen dabei so auswählen, daß keine aus sterischen oder anderen Gründen sinnlosen Kombinationen von Substituenten entstehen. Insbesondere sollten pro dargestellter Einheit der Formel I oder II maximal zwei, vorzugsweise nur eine oder auch keine sterisch anspruchsvolle Gruppe wie ein t-Butylgruppe ausgewählt werden.

Z.B. weisen m und p unabhängig voneinander die Werte 1, 2, 3, 4, 5, 6, 7, 8 oder 9 auf. Sie können aber auch Werte von 10 bis 100 und mehr aufweisen.

Arylgruppen können substituiert oder unsubstituiert sein und z.B. 1, 2, 3 oder 4 kondensierte aromatische Ringe mit jeweils z.B. 4, 5, 6, 7, 8, 9 oder 10 C-Atomen und/oder bis zu zwei N, O oder S-Atomen aufweisen.

Als Substituenten z.B. der substituierten Alkylgruppen oder Arylgruppen etc. können z.B. C₁-C₆-Alkylgruppen, Arylgruppen, -NO₂-, -OH-, -CN-, -NH₂-, -SO₂-, -COOH-, -CO-O-C₁-C₆-Alkyl- oder -C₁-C₆-Acylgruppen erwähnt werden.

Erfindungsgemäß können die Reste R, R₁ oder R' unabhängig voneinander mindestens eine weitere funktionelle Gruppe enthalten, wobei als weitere funktionelle Gruppen Hydrogensilyl-, Alkoxysilyl-, Epoxy-, Säure oder Aziridin-Gruppen bevorzugt werden. Als Säuregruppen werden z.B. Phosphor-haltige Säuregruppen wie Phosphorsäure- oder Phosphonsäuregruppen, oder C1-C6-Carbonsäuregruppen bevorzugt. Vorzugsweise stellen die Reste R, R₁ oder R' jedoch höchstens eine, vorzugsweise keine weiter Vinylgruppe dar, da die Haftmittel sonst gegebenenfalls zu stark vernetzt würden.

Die Haftvermittler weisen vorzugsweise ein durchschnittliches Gewichtsmittel des Molekulargewichts von 5.000 - 1.000.000, besonders bevorzugt von 20.000 - 200.000 auf.

Vorzugsweise weisen die erfindungsgemäß eingesetzten Haftvermittler die Einheiten (I:II) in einem Verhältnis von 25:1 bis zu 1:25 oder 10:1 bis zu 1:10 oder 5:1 bis zu 1:5, insbesondere auch 5:1 bis zu 2:1 auf. Die Grundketten weisen vorzugsweise mindestens 50 der vorstehenden Einheiten I und/oder II auf.

Nach Aufbringung der Haftvermittler wird der Formkörper oder Abformlöffel gegebenenfalls mit einer dünnen Schicht Silicon (Schicht b)) überzogen und ausgehärtet, die von Schicht a) verschieden ist.

Die Schichtdicken der Schichten a) und b) können z.B. 0,001 bis 5 mm, vorzugsweise 0,1 bis 1 mm betragen.

Das Silicon der Schicht b) kann ein durch eine Additionsreaktion vernetzbares Vinylsilicon oder ein durch eine Kondensationsreaktion vernetzbares Silicon enthalten oder daraus bestehen. Beim Aufbringen können die Silicone vorzugsweise in einer dünnfließenden Form verwendet werden.

Dünnfließende Verbindungen weisen erfindungsgemäß z.B. eine Viskosität von 10-100 000, vorzugsweise 500-30000 und am stärksten bevorzugt von 10 000- 20 000 centistokes auf.

Bei erfindungsgemäßen Formkörpern umfaßt die Schicht b) gemäß einer weiteren Ausführungsform Silicone, die bereits zumindest teilweise durch eine Additions- und/oder Kondensationsreaktion vernetzt sind. Sie können z.B. einen Vernetzungsgrad von bis zu 10, 20, 30, 50, 60 oder 80 %, bezogen auf die funktionellen Gruppen aufweisen.

Das Silicon der Schicht b) kann bei allen Ausführungsformen funktionelle Gruppen enthalten, die durch eine Additionsund/oder Kondensationsreaktion vernetzbar sind, wobei die funktionellen Gruppen SiH- oder Si-Vinyl-Gruppen und/oder SiOH-Gruppen bzw. deren hydrolysierbare Derivate sein können.

Im Falle von Formkörpern wie Abformlöffeln für additionsvernetzende Abformmassen kann der Löffel nach Applikation eines Copolymer-Primers (A) z.B. mit einer vorzugsweise dünnfließenden additionsvernetzenden Siliconmasse beschichtet werden. Nach Aushärtung der Masse ist der Löffel zur Aufnahme von additionsvernetzenden Abformmassen bereit, die nach der Abdrucknahme fest auf ihm haften.

Im Falle von Abformlöffeln für kondensationsvernetzende Abformmassen kann der Löffel nach Applikation eines Copolymer-Primers (K) z.B. mit einer vorzugsweise dünnfließenden kondensationsvernetzenden Siliconmasse beschichtet werden. Nach Aushärtung der Masse ist der Löffel zur Aufnahme von kondensationsvernetzenden Abformmassen bereit, die nach der Abdrucknahme fest auf ihm haften.

Sollen die erfindungsgemäßen Formkörper, insbesondere die Abformlöffel über eine längere Zeit gebrauchsfähig sein, wird die Beschichtung vorzugsweise derart gestaltet, daß durch Verminderung oder Überschuß einer der Komponenten, die zur Herstellung der Schicht a) und/oder b) miteinander umgesetzt werden, die Aushärtung zwar zu einem festen Film führt, die Reaktion jedoch noch so unvollständig ist, daß auch über längere Zeit noch genügend zur Härtung befähigte Gruppen (z.B. Si-OH oder Si-OR bei kondensationsvernetzenden, Si-H oder Si-Vinyl bei additionsvernetzenden Systemen) zwecks Reaktion mit dem darauf applizierten Abdruckmaterial vorliegen.

Besonders bevorzugt wird, daß eine der beiden oder mehreren Einzelkomponenten um ca. 10 bis 20 % vermindert oder in entsprechendem Überschuß über das Mischungsverhältnis zugegeben wird, welches vom Hersteller für die bestimmungsgemäße Anwendung der Materialien vorgegeben wird.

Prinzipiell können weiche bis harte Siliconüberzüge geeignet sein. Bevorzugt sind jedoch Filme mit einer Shore-A-Härte von 5 - 50, besonders bevorzugt Shore-A-Härten von 10 bis 30. Da zum dünnen, gleichmäßigen Beschichten der Abformlöffel eine gute Fließfähigkeit der noch nicht ausgehärteten Siliconmassen vorteilhaft ist, sind z.B. handelsübliche Dubliermassen oder extra leicht fließende Korrekturmassen für Doppelabformungen, die in der Regel in den bevorzugten Härtebereichen liegen, besonders geeignet.

Die erfindungsgemäßen Abformlöffel können beim Zahnarzt direkt mit Abformmasse des entsprechenden Härtungstyps beschickt und zum Zwecke der Abformung in den Mund verbracht werden. Bei Herausnahme des beschickten Abformlöffels bleiben Abformmasse und Abformlöffel fest verbunden. Ein Ablösen von Teilen der ausgehärteten Abformmasse vom Abformlöffel findet nicht statt; es treten keine entsprechenden Distortionen und Fehlabformungen auf. Versuche, die Abformmasse vom Abformlöffel zu entfernen, führen zu Abrissen von Abformmaterial.

Auch die teilweise Beschichtung von Abformlöffeln kann zu einer ausreichenden Haftung von auf den Abformlöffeln befindlichen Abformmaterialien führen.

Auch können die erfindungsgemäßen Anwendungen im industriellen Bereich sinnvoll sein. So können vorgefertigte Teile, die erfindungsgemäß beschichtet oder teilbeschichtet sind leicht und irreversibel durch eine Mischung härtender Silicone gleichen Reaktionstypes dauerelastisch verbunden werden.

### BEISPIELE

### Beispiel 1

### Herstellung eines beschichteten Löffels für additionsvernetzende Abformsilicone

Ein Abformlöffel aus Polycarbonat (Miratray - 1400, Hager & Werken, Deutschland) wird mit einem Primer entsprechend dem Beispiel 2 der Patentanmeldung 1 99 05 224 der Firma S & C Polymer vom 9.2.99 bestrichen und getrocknet. Darauf wird der so behandelte Abformlöffel in eine frisch angemischte Menge Dubliermasse Contour (Fa. Dentoflex, Deutschland) getaucht, welche aus 9 Teilen Komponente A (Basis) und 11 Teilen Komponente B (Katalysator) gemischt war (das normale Mischverhältnis wird mit 1 : 1 angegeben), und die resultierende ca. 0,5 mm dicke Schicht härten gelassen. Nach 1, 4, und 8 Wochen wird mit dem Löffel ohne weitere Behandlung ein Abdruck mit der additionsvernetzenden Siliconvorabformmasse R-si-line Putty (R-Dental, Deutschland) genommen. Der Abdruck haftet in allen Fällen fest auf dem Löffel und kann nur unter Zerstörung der Abformmasse entfernt werden.

### Beispiel 2

### Herstellung eines beschichteten Löffels für kondensationsvernetzende Abformsilicone

Ein Abformlöffel aus Polystyrol (Miratray, Hager & Werken, Deutschland) wird mit einem Primer entsprechend dem Beispiel 2 aus der Patentanmeldung 1 99 15 492 der Firma S & C Polymer vom 7.4.99 bestrichen und getrocknet. Darauf wird die Innenfläche des so behandelten Abformlöffels mit einer Mischung frisch angemischter kondensationsvernetzender Korrektursiliconmasse Xantopren VL (Fa. Kulzer, Deutschland), bei der nur 20% der empfohlenen Härtermenge genommen ist, beschichtet.

Nach 2 Wochen wird mit dem so behandelten Abformlöffel eine Abformung mit der kondensationsvernetzenden Siliconabformmasse Optosil vorgenommen. Die Abdruckmasse haftet nach Aushärtung extrem fest auf dem Abformlöffel, auch wenn das durch die Lochretentionen dieses marktüblichen Abformlöffels durchragende Siliconmaterial vorher entfernt wurde.

## Patentansprüche

1. Gebrauchsfertige dentale Einmal-Abformlöffel mit haftenden Überzügen, mit:
a) einer Schicht aus mindestens einem durch Additions- oder Kondensationsreaktionen vernetzbaren Copolymeren, und gegebenenfalls
b) darauf einer Schicht aus mindestens einem durch Additionsoder Kondensationsreaktionen vernetzbaren Silicon.

2. Abformlöffel nach Anspruch 1, **dadurch gekennzeichnet, daß** er neben den Schichten a) und b) mindestens einen Kunststoff und/oder mindestens ein Metall enthält.

3. Abformlöffel nach Anspruch 2, **dadurch gekennzeichnet, daß** der Kunststoff aus Polystyrol, Polycarbonat, Polymethacrylat, Polymethylpenten und Styrolacrylnitril oder einem Gemisch daraus ausgewählt wird.

4. Abformlöffel nach Anspruch 2, **dadurch gekennzeichnet, daß** das Metall ein nicht-edles Metall ist.

5. Abformlöffel nach einem der Ansprüche 2 oder 4, **dadurch gekennzeichnet, daß** das Metall oberflächenbehandelt wurde.

6. Abformlöffel nach Anspruch 4 oder 5, **dadurch gekennzeichnet, daß** die Oberfläche des nicht-edlen Metalls mit Alkoxy-, Alkylacetoxy-, Vinyl-, oder Methacrylsilan, Phosphorsäure, Phosphonsäuren, mehrfunktionellen Carbonsäuren oder Derivaten davon behandelt wurde.

7. Abformlöffel nach einem der Ansprüche 2, 4 oder 5, **dadurch gekennzeichnet, daß** das Metall mit einem oder mehreren anlösbaren Kunststoffen beschichtet wird.

8. Abformlöffel nach einem der vorstehenden Ansprüche, **dadurch gekennzeichnet, daß** die Schicht a) Copolymere umfaßt, die zumindest teilweise durch eine Additions- und/oder Kondensationsreaktion vernetzt sind.

9. Abformlöffel nach einem der vorstehenden Ansprüche, **dadurch gekennzeichnet, daß** die Copolymere erhältlich sind durch die Copolymerisation von SiH-Gruppen-haltigen Siloxanen mit ungesättigten Verbindungen.

10. Abformlöffel nach einem der Ansprüche 1 bis 8, **dadurch gekennzeichnet, daß** die Copolymere erhältlich sind durch die (Co-)Polymerisation von ungesättigten Verbindungen mit nachträglicher Verknüpfung mit SiH-Gruppen- oder Vinylgruppenhaltigen Siloxanen.

11. Abformlöffel nach einem der Ansprüche 1 bis 8, **dadurch gekennzeichnet, daß** die Copolymere sich gegebenenfalls wiederholende strukturelle Einheiten
a) der Formel 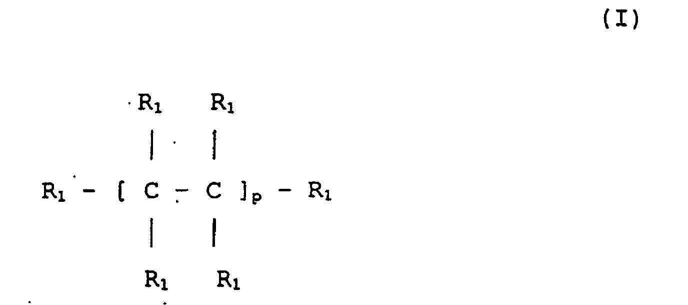 und
b) der Formel 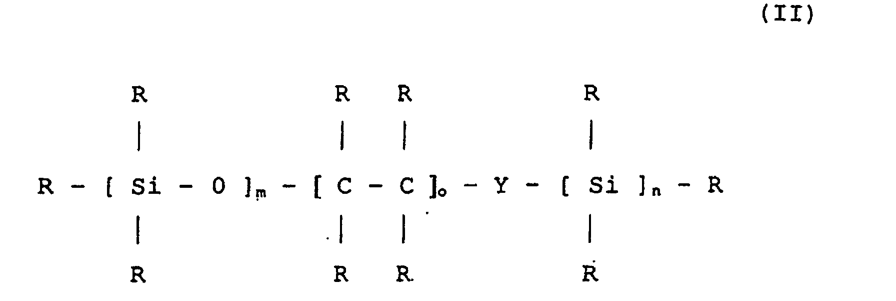 enthalten, wobei
m und p unabhängig voneinander ganze Zahlen > 0 sind,
n = 1, 2, 3 oder 4,
o = 1 oder 0 ist,
Y eine Bindung oder eine Gruppe der Formel -CR₂- oder -CO-O-CR₂-CR₂-CR₂- ist,
jeder der Reste R und R₁ unabhängig voneinander ein H-Atom, eine gegebenenfalls substituierte Alkylgruppe, eine Gruppe der Formel -CR'₂-OR', -OR', -COOR', -SiR_{c}R_{d}Rₑ, -NR_{d}-R_{c}, ein organischer Säurerest, dessen Anhydrid oder dessen entsprechender Ester der Formel -O-CO-R_{c} oder dessen entsprechendes Amid der Formel -NR_{d}-CO-R_{c}, eine gegebenenfalls mit einer oder zwei -CR'=CR'₂ -Gruppen substituierte Phenylgruppe, eine Gruppe der Formel -CRₑR_{f}CHR_{g}-SiX₃, eine Gruppe der Formel -SiOSiO(SiO)ₘH, eine Epoxygruppe, eine Aziridingruppe, eine Phosphat- oder Phosphonatgruppe bzw. deren Anhydride, eine Bindung ist oder zwei Reste R und/oder R₁ zusammen eine Gruppe der Formel =CR₂ darstellen,
wobei jeder der Reste R', R_{c}, R_{d}, Rₑ, R_{f}, R_{g} und X unabhängig voneinander ein H-Atom eine -OH-Gruppe, eine gegebenenfalls substituierte Alkylgruppe, Alkoxygruppe oder Arylgruppe sein kann,
mit der Maßgabe, daß in mindestens einer Einheit der Formel II mindestens ein an ein Si-Atom gebundener Rest R eine -OH, -OR_{c}, -NR_{d}R_{c}-Gruppe oder ein Rest der Formeln -OCOR_{c}, -NR_{d}COR_{c} ist, wobei n 1, 2, 3 oder 4 ist.

12. Abformlöffel nach einem der Ansprüche 1 bis 8, **dadurch gekennzeichnet, daß** die Copolymere sich gegebenenfalls wiederholende strukturelle Einheiten
a) der Formel 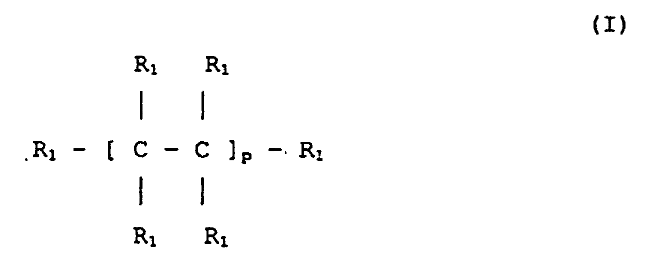 und
b) der Formel 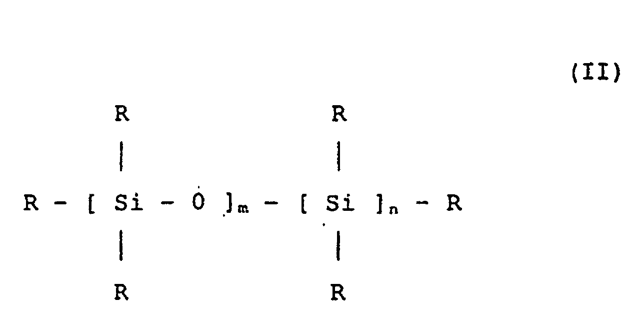 enthalten, wobei m und p unabhängig voneinander ganze Zahlen > 0 sind, n 1 ist, jeder der Reste R und R₁ unabhängig voneinander ein H-Atom, eine gegebenenfalls substituierte Alkylgruppe, eine Gruppe der Formel = CR'₂, -CR'₂-OR', -OR', -COOR', -SiR'₃ oder eine gegebenenfalls mit einer oder zwei -CR'= CR'₂-Gruppen substituierte Phenylgruppe oder eine Bindung ist, wobei jeder der Reste R' unabhängig voneinander ein H-Atom oder eine substituierte oder unsubstituierte Alkylgruppe sein kann, mit der Maßgabe, daß die Gruppen der Formel II mindestens eine Si-H-Gruppe enthalten und daß die Einheiten der Formel I mit den Einheiten der Formel II über C-Si-Bindungen verknüpft sind.

13. Abformlöffel nach einem der vorstehenden Ansprüche, **dadurch gekennzeichnet, daß** die Schicht b) mindestens ein durch Additions- oder Kondensationsreaktionen vernetzbares Silicon enthält oder aus diesem besteht.

14. Abformlöffel nach einem der vorstehenden Ansprüche, **dadurch gekennzeichnet, daß** das Silicon der Schicht b) ein durch eine Additionsreaktion vernetzbares Vinylsilicon oder ein durch eine Kondensationsreaktion vernetzbares Silicon enthält oder daraus besteht.

15. Abformlöffel nach einem der vorstehenden Ansprüche, **dadurch gekennzeichnet, daß** das Silicon der Schicht b) einen Überschuß an Vinylsilicon oder Hydrogensilicon enthält.

16. Abformlöffel nach einem der vorstehenden Ansprüche, **dadurch gekennzeichnet, daß** das Silicon der Schicht b) einen Überschuß an Silicon mit Silanolgruppen -Si(X)- enthält, wobei X = OH oder deren entsprechenden leichthydrolysierbare Ester oder Amide-O-Rc, -O-CO-Rc, -NRd-Rc, oder - NRd-CO-Rc sind.

17. Abformlöffel nach einem der Ansprüche 13 bis 16, **dadurch gekennzeichnet, daß** das Silicon der Schicht b) funktionelle Gruppen enthält, die durch eine Additions- und/oder Kondensationsreaktion vernetzbar sind.

18. Abformlöffel nach Anspruch 17, **dadurch gekennzeichnet, daß** die funktionellen Gruppen SiH- oder Si-Vinyl-Gruppen sind.

19. Abformlöffel nach Anspruch 17, **dadurch gekennzeichnet, daß** die funktionellen Gruppen SiOH-Gruppen oder deren hydrolysierbare Derivate sind.

20. Verfahren zur Herstellung eines Abformlöffels nach einem der vorstehenden Ansprüche, **dadurch gekennzeichnet, daß** ein Abformlöffel mit einer Schicht von durch Additions- oder Kondensationsreaktionenen vernetzbaren Copolymeren beschichtet und darauf gegebenenfalls eine Schicht aus durch Additions- oder Kondensationsreaktionnen vernetzbaren Siliconen aufgebracht wird.

21. Verwendung von Abformlöffeln nach einem der Ansprüche 1 bis 19 zum Nehmen von Abdrücken von menschlichen oder tierischen Zähnen.

## Claims

1. Ready-for-use, single-use dental impression trays, having adherent coatings, which have:
a) a layer of at least one copolymer that is crosslinkable by means of addition or condensation reactions and, optionally,
b) thereon, a layer of at least one silicone that is crosslinkable by means of addition or condensation reactions.

2. Impression tray according to claim 1, **characterised in that**, in addition to layers a) and b), it comprises at least one plastics material and/or at least one metal.

3. Impression tray according to claim 2, **characterised in that** the plastics material is selected from polystyrene, polycarbonate, polymethacrylate, polymethylpentene and styrene-acrylonitrile or a mixture thereof.

4. Impression tray according to claim 2, **characterised in that** the metal is a non-noble metal.

5. Impression tray according to either claim 2 or claim 4, **characterised in that** the metal has been surface-treated.

6. Impression tray according to claim 4 or 5, **characterised in that** the surface of the non-noble metal has been treated with alkoxy-, alkylacetoxy-, vinyl- or methacrylosilane, phosphoric acid, phosphonic acids, polyfunctional carboxylic acids or derivatives thereof.

7. Impression tray according to any one of claims 2, 4 and 5, **characterised in that** the metal is coated with one or more partially dissolvable plastics materials.

8. Impression tray according to any one of the preceding claims, **characterised in that** layer a) comprises copolymers that are crosslinked, at least partially, by means of an addition and/or condensation reaction.

9. Impression tray according to any one of the preceding claims, **characterised in that** the copolymers are obtainable by copolymerisation of SiH-group-containing siloxanes with unsaturated compounds.

10. Impression tray according to any one of claims 1 to 8, **characterised in that** the copolymers are obtainable by (co)polymerisation of unsaturated compounds with subsequent linking to SiH-group- or vinyl-group-containing siloxanes.

11. Impression tray according to any one of claims 1 to 8, **characterised in that** the copolymers contain optionally repeating structural units,
a) of the formula 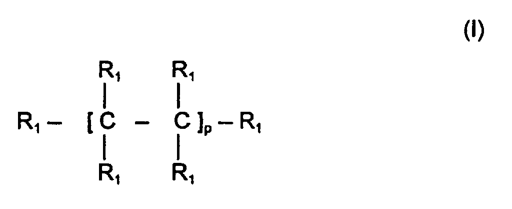 and
b) of the formula 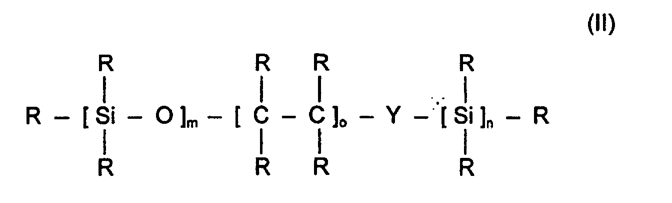 wherein
m and p are each independently of the other whole numbers > 0,
n = 1, 2, 3 or 4,
o = 1 or 0,
Y is a bond or a group of the formula -CR₂- or -CO-O-CR₂-CR₂-CR₂-,
each of the radicals R and R₁ independently of the others is a H atom, an optionally substituted alkyl group, a group of the formula -CR'₂-OR', -OR', -COOR', -SiR_{c}R_{d}Rₑ, -NR_{d}-R_{c}, an organic acid radical, its anhydride or its corresponding ester of the formula -O-CO-R_{c} or its corresponding amide of the formula -NR_{d}-CO-R_{c}, a phenyl group optionally substituted by one or two -CR'=CR'₂ groups, or a group of the formula -CRₑR_{f}CHR_{g}-SiX₃, a group of the formula -SiOSiO(SiO)ₘH, an epoxy group, an aziridine group, a phosphate or phosphonate group or an anhydride thereof, or is a bond, or two radicals R and/or R₁ together represent a group of the formula =CR₂,
and each of the radicals R', Rₑ, R_{d}, Rₑ, R_{f}, R_{g} and X independently of the others may be a H atom, a -OH group, an optionally substituted alkyl group, alkoxy group or aryl group,
with the proviso that in at least one unit of the formula II at least one radical R bonded to a Si atom is a -OH, -OR_{c}, -NR_{d}R_{c} group or a radical of the formula -OCOR_{c} or -NR_{d}COR_{c}, n being 1, 2, 3 or 4.

12. Impression tray according to any one of claims 1 to 8, **characterised in that** the copolymers contain optionally repeating structural units,
a) of the formula 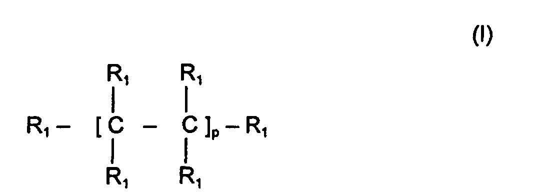 and
b) of the formula 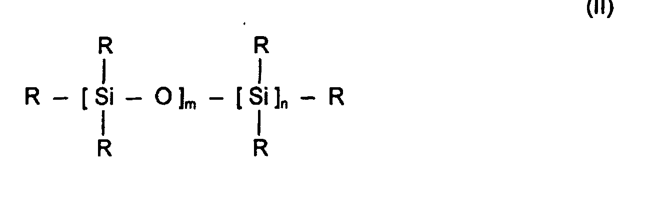 wherein m and p are each independently of the other whole numbers > 0, n is 1, each of the radicals R and R₁ independently of the others is a H atom, an optionally substituted alkyl group, a group of the formula =CR'₂, -CR'₂-OR', -OR', -COOR', -SiR'₃ or a phenyl group optionally substituted by one or two -CR'=CR'₂ groups, or is a bond, and each of the radicals R' independently of the others may be a H atom or a substituted or unsubstituted alkyl group, with the proviso that the groups of the formula II contain at least one Si-H group and that the units of the formula I are linked to the units of the formula II *via* C-Si bonds.

13. Impression tray according to any one of the preceding claims, **characterised in that** layer b) comprises, or consists of, at least one silicone that is crosslinkable by means of addition or condensation reactions.

14. Impression tray according to any one of the preceding claims, **characterised in that** the silicone of layer b) comprises, or consists of, a vinyl silicone that is crosslinkable by means of an addition reaction or a silicone that is crosslinkable by means of a condensation reaction.

15. Impression tray according to any one of the preceding claims, **characterised in that** the silicone of layer b) comprises an excess of vinyl silicone or hydrogen silicone.

16. Impression tray according to any one of the preceding claims, **characterised in that** the silicone of layer b) comprises an excess of silicone having silanol groups -Si(X) - wherein X = OH or their corresponding readily hydrolysable esters or amides -O-Rc, -O-CO-Rc, -NRd-Rc or -NRd-CO-Rc.

17. Impression tray according to any one of claims 13 to 16, **characterised in that** the silicone of layer b) contains functional groups that are crosslinkable by means of an addition and/or condensation reaction.

18. Impression tray according to claim 17, **characterised in that** the functional groups are SiH or Si-vinyl groups.

19. Impression tray according to claim 17, **characterised in that** the functional groups are SiOH groups or hydrolysable derivatives thereof.

20. Process for the production of an impression tray according to any one of the preceding claims, **characterised in that** an impression tray is coated with a layer of copolymers that are crosslinkable by means of addition or condensation reactions and, optionally, a layer of silicones that are crosslinkable by means of addition or condensation reactions is applied thereon.

21. The use of impression trays according to any one of claims 1 to 19 for taking casts of human or animal teeth.

## Revendications

1. Porte-empreinte dentaire jetable, prêt à l'emploi pourvu d'un revêtement adhésif, comportant
(a) une couche d'au moins un copolymère réticulable par réaction d'addition ou de condensation, et éventuellement,
(b) au-dessus de cette couche, une autre couche d'au moins une silicone réticulable par réaction d'addition ou de condensation.

2. Porte-empreinte selon la revendication 1, **caractérisé par le fait qu'**il comprend, en plus des couches (a) et (b), au moins une matière plastique et/ou au moins un métal.

3. Porte-empreinte selon la revendication 2, **caractérisé par le fait que** la matière plastique est en polystyrène, polycarbonate, polyméthacrylate, poly(méthylpentène) ou poly(styrène/acrylonitrile) ou en un mélange de ces polymères.

4. Porte-empreinte selon la revendication 2, **caractérisé par le fait que** le métal est un métal non-noble.

5. Porte-empreinte selon la revendication 2 ou 4, **caractérisé par le fait que** le métal est un métal traité en surface.

6. Porte-empreinte selon la revendication 4 ou 5, **caractérisé par le fait que** la surface du métal non-noble a été traitée avec des alcoxysilanes, alkylacétoxysilanes, vinylsilanes ou méthacrylsilanes, de l'acide phosphorique, des acides phosphoniques, des acides polycarboxyliques ou des dérivés de ceux-ci.

7. Porte-empreinte selon l'une des revendications 2, 4 ou 5, **caractérisé par le fait que** le métal est revêtu d'un ou de plusieurs matières plastiques solubles en surface.

8. Porte-empreinte selon une des revendications précédentes, **caractérisé par le fait que** la couche (a) comprend des copolymères au moins partiellement réticulés par réaction d'addition et/ou de condensation.

9. Porte-empreinte selon une des revendications précédentes, **caractérisé par le fait que** l'on peut obtenir les copolymères par copolymérisation de siloxanes à groupes SiH et de composés insaturés.

10. Porte-empreinte selon l'une des revendications 1 à 8, **caractérisé par le fait que** l'on peut obtenir les copolymères par (co)polymérisation de composés insaturés, suivie d'une réticulation avec des siloxanes à groupes SiH ou vinyle.

11. Porte-empreinte selon l'une des revendications 1 à 8, **caractérisé par le fait que** les copolymères comportent des motifs constitutifs, éventuellement répétitifs,
a) de formule 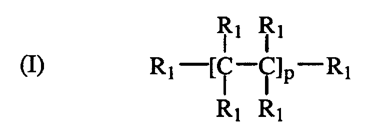 et
b) de formule 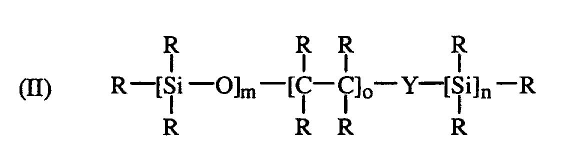 où m et p représentent chacun indépendamment de l'autre un nombre entier supérieur à 0,
n vaut 1, 2, 3 ou 4,
o vaut 1 ou 0,
Y représente une liaison ou un groupe de formule -CR₂- ou -CO-O-CR₂-CR₂-CR₂-
chacun des résidus R et R₁ représente indépendamment de l'autre un atome d'hydrogène, un groupe alkyle éventuellement substitué, un groupe de formule -CR'₂-OR', -OR', -COOR', -SiR_{c}R_{d}Rₑ, -NR_{d}-R_{c}, un résidu d'acide organique, un anhydride d'un tel acide ou un ester d'un tel acide de formule -O-CO-Rc ou l'amide correspondant de formule -NR_{d}-CO-R_{c}, un résidu phényle portant éventuellement un ou deux groupes -CR"=CR'₂, un résidu de formule -CRₑR_{f}CHR_{g}-SiX₃, un groupe de formule -Si-O-Si-O-(SiO)ₘH, un groupe époxy, un groupe aziridine, un groupe phosphate ou phosphonate ou les anhydrides correspondants, ou une liaison, ou deux résidus R et/ou R₁ représentent conjointement un groupe de formule =CR₂,
chacun des symboles R', R_{c}, R_{d}, Rₑ, R_{f}, R_{g} et X représentant indépendamment de l'autre un atome d'hydrogène, un groupe OH, un groupe alkyle, alcoxy ou aryle éventuellement substitués,
avec la réserve que, dans au moins un motif de formule (II), au moins un résidu R lié à un atome de silicium représente un groupe -OH, -OR_{c}, -NR_{d}R_{c} ou un résidu de formule -OCOR_{c}, -NR_{d}COR_{c}, avec n = 1, 2, 3 ou 4.

12. Porte-empreinte selon l'une des revendications 1 à 8, **caractérisé par le fait que** les copolymères contiennent des motifs constitutifs, éventuellement répétitifs,
a) de formule 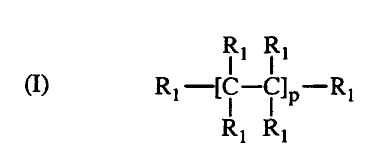 et
b) de formule 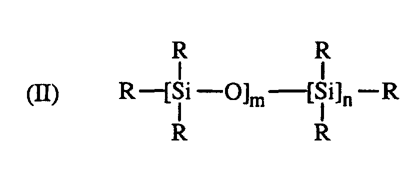
où m et p représentent chacun indépendamment de l'autre un nombre entier supérieur à 0, n est égal à 1,
R et R₁ représente chacun indépendamment de l'autre un atome d'hydrogène, un groupe alkyle éventuellement substitué, un groupe de formule =CR'₂, -CR"₂-OR', -OR', -COOR', -SiR'₃ ou un groupe phényle portant éventuellement un ou deux groupes -CR'=CR'₂, ou une liaison,
chacun des résidus R' représentant indépendamment de l'autre un atome d'hydrogène ou un groupe alkyle substitué ou non-substitué,
avec la réserve que les groupes de formule (II) contiennent au moins un groupe SiH et que les motifs de formule (I) sont reliés aux motifs de formule (II) par des liaisons C-Si.

13. Porte-empreinte selon l'une des revendications précédentes, **caractérisé par le fait que** la couche (b) contient au moins une silicone réticulable par réaction d'addition ou de condensation, ou est constituée d'une telle silicone.

14. Porte-empreinte selon l'une des revendications précédentes, **caractérisé par le fait que** la silicone de la couche (b) contient une vinylsilicone réticulable par réaction d'addition ou une silicone réticulable par réaction de condensation, ou est constituée d'une telle vinylsilicone ou silicone.

15. Porte-empreinte selon l'une des revendications précédentes, **caractérisé par le fait que** la silicone de la couche b contient un excès de vinylsilicone ou d'hydrogénosilicone.

16. Porte-empreinte selon une des revendications précédentes, **caractérisé par le fait que** la silicone de la couche (b) contient un excès de silicone à groupes silanol -Si(X)- où X = OH ou un ester facilement hydrolysable de ceux-ci ou amide-O-R_{c}, -O-COR_{c}, -NR_{d}-Rc ou -NR_{d}-COR_{c}.

17. Porte-empreinte selon une des revendications 13 à 16, **caractérisé par le fait que** la silicone de la couche (b) contient des groupes fonctionnels réticulables par une réaction d'addition et/ou de condensation.

18. Porte-empreinte selon la revendication 17, **caractérisé par le fait que** les groupes fonctionnels sont des groupes SiH ou Si-vinyle.

19. Porte-empreinte selon la revendication 17, **caractérisé par le fait que** les groupes fonctionnels sont des groupes SiOH ou des dérivés hydrolysables de ceux-ci.

20. Procédé de fabrication d'un porte-empreinte selon l'une des revendications précédentes, **caractérisé par le fait que** l'on dépose sur un porte-empreinte une couche de copolymère réticulable par réaction d'addition ou de condensation et que l'on dépose, sur cette couche, éventuellement une couche de silicone réticulable par réaction d'addition ou de condensation.

21. Utilisation d'un porte-empreinte selon l'une des revendications 1 à 19, pour la réalisation d'empreintes de dentitions humaines ou animales.
